Europäisches Patentamt

(19) **European Patent Office**

Office européen des brevets

(11) Veröffentlichungsnummer: **0 039 683**
**B1**

(12) # EUROPÄISCHE PATENTSCHRIFT

(45) Veröffentlichungstag der Patentschrift:
22.02.84

(51) Int. Cl.³: **G 01 V 9/04, F 16 P 3/14**

(21) Anmeldenummer: **80901937.5**

(22) Anmeldetag: **10.10.80**

(86) Internationale Anmeldenummer:
**PCT/EP 80/00108**

(87) Internationale Veröffentlichungsnummer:
**WO 81/01200 (30.04.81 Gazette 81/11)**

(54) **LICHTGITTER MIT EINER EINZIGEN LICHTQUELLE.**

(30) Priorität: **16.10.79 DE 2941739**

(43) Veröffentlichungstag der Anmeldung:
**18.11.81 Patentblatt 81/46**

(45) Bekanntmachung des Hinweises auf die Patenterteilung:
**22.02.84 Patentblatt 84/8**

(84) Benannte Vertragsstaaten:
**AT CH FR GB LI NL SE**

(56) Entgegenhaltungen:
**DE - A - 2 255 788**
**US - A - 4 015 122**
**US - A - 4 054 366**
**US - A - 4 161 651**

**Electro/80 Conference Record, volume 5, Mai 13-15, 1980, Boston (US), A. Bender "Fiber optic data bus overview", 28/1, Seiten 1-6, siehe den ganzen Artikel**

(73) Patentinhaber: **KROHNE MESSTECHNIK GMBH & CO. KG, Ludwig-Krohne-Strasse 5, D-4100 Duisburg 1 (DE)**

(72) Erfinder: **SPRATTE, Hans-Hermann, Strippchenshof 23, D-4330 Mülheim/Rphr (DE)**

(74) Vertreter: **Ackmann, Günther, Dr.-Ing., Claubergstrasse 24 Postfach 10 09 22, D-4100 Duisburg 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Lichtgitter mit einer einzigen Lichtquelle

Die Erfindung betrifft ein Lichtgitter der im Oberbegriff des Anspruchs 1 genannten Art.

Lichtgitter dienen dem Zweck, bei einem unerwünschten Eingriff in den Arbeitsraum einer Maschine, beispielsweise einer Presse, ein Signal auszulösen, mit dessen Hilfe die Maschine zeitweilig oder ganz stillgesetzt wird. Sie bestehen aus einer Vielzahl den zu kontrollierenden Arbeitsraum erfassenden optischen Kanälen, die jeweils durch einen Lichtsender und einen Lichtempfänger gebildet werden. Bei einer Unterbrechung des Lichtganges löst eine Auswertungselektronik das Signal aus. Für Lichtgitter dieser Art sind im wesentlichen zwei Systeme bekannt. Bei dem einen System hat jeder optische Kanal eine eigene Lichtquelle, z. B. in Form einer Leuchtdiode, wobei entweder die Lichtquellen gleichzeitig zyklisch angesteuert und die Signale der Lichtempfänger in einem UND-Glied verknüpft werden (DE-A-1 616 016), bzw. die Lichtquellen werden nacheinander zyklisch angesteuert, wobei die Auswertung der Ausgangssignale im gleichen Rhythmus gesteuert wird (DE-C-2 247 053), oder wobei die Lichtsignale über einen gemeinsamen Lichtleiter nur einem photoelektrischen Wandler zugeführt werden (DE-B-1 941 905). Bei dem anderen System werden die optischen Kanäle von einer gemeinsamen Lichtquelle ausgeleuchtet, wobei die Lichtverteilung auf die Kanäle durch ein Linsensystem oder mit Hilfe eines Drehspiegels und eines Parabolspiegels erfolgt (DE-A-1 441 426). Bei einer nach diesem System arbeitenden Ausführung (DE-A-2 158 182) betätigt eine Steuereinrichtung in Form eines Motors eine Lichtverteilereinheit, die durch eine bewegte Optik gebildet wird, welche ihrerseits mit einer einzigen Lichtquelle zusammenwirkt. Die schwingende oder rotierende Optik beaufschlagt über Lichtleiter im Folgebetrieb mehrere optische Sendekanäle mit dem von der Lichtquelle ausgehenden Strahlenbündel, und den photoelektrischen Wandlern ist eine elektronische Auswertschaltung nachgeordnet.

Die Einrichtungen für den Lichtempfang können entweder auf der den Lichtquellen gegenüberliegenden Seite des zu kontrollierenden Arbeitsraumes oder auf der gleichen Seite wie die Lichtquellen liegen, wobei im letzteren Fall an der gegenüberliegenden Seite ein Reflektor angebracht ist und die reflektierten Strahlen mittels halbdurchlässiger Spiegel auf die zugehörigen Lichtempfänger gelenkt werden.

Allen bekannten Glüh- und Leuchtstofflampen haftet der Nachteil an, daß diese Lichtquellen im Aufbau aufwendig und außerdem störanfällig sind (niedrige Lebensdauer). Ein zur Störlichtunterdrückung zweckmäßiger Impulsbetrieb verringert bei den obigen Lichtquellen die Lebensdauer erheblich. Die bekannten Linsensysteme erlauben nur den gleichzeitigen Betrieb aller Kanäle und bei der Strahlenverteilung mittels eines Drehspiegels läßt sich weder die Dauer der Lichtimpulse noch deren Folge steuern. Auch die als Lichtempfänger dienenden Fotodioden stellen eine Störquelle dar. Sie können durch Überstrahlung benachbarter optischer Kanäle oder fremde Lichtquellen Fehlsignale auslösen, die durch eine aufwendige, selbstüberwachende logische Prüfschaltung (Koinzidenzstufe) eliminiert werden müssen.

Demgegenüber liegt der Erfindung die Aufgabe zugrunde, ein Lichtgitter der gattungsgemäßen Art derart auszubilden, daß ohne Verwendung bewegter Bauteile die den einzelnen optischen Kanälen zugeführten und einer Lichtquelle entstammenden Lichtimpulse in ihrer Dauer und Folge steuerbar sind.

Diese Aufgabe wird ausgehend von dem Lichtgitter gemäß dem Oberbegriff des Anspruchs 1 erfindungsgemäß durch die Merkmale a) bis d) des Anspruchs 1 gelöst.

Bei dem erfindungsgemäß ausgebildeten Lichtgitter bilden die optischen Richtkoppler elektronisch steuerbare Lichtweichen, mit deren Hilfe die in einer Lichtquelle erzeugten und durch Lichtleiterabschnitte geführten Lichtimpulse nacheinander und zyklisch in die optischen Kanäle gesteuert werden. Während bei einer Lichtverteilung mittels eines Drehspiegels die Dauer und die Folge der in die optischen Kanäle gelenkten Lichtimpulse im wesentlichen vom optischen Aufbau und der Drehgeschwindigkeit abhängt, läßt sich bei der Erfindung die Dauer und die Folge der Lichtimpulse variieren und unterschiedlichen Verhältnissen anpassen. Dabei sind keine störanfälligen mechanischen Bauteile erforderlich.

Die für optische Nachrichtensysteme bekannten optischen Richtkoppler bestehen aus zwei in ein Substrat eingebetteten dielektrischen Wellenleitern und dem Aufbau eines elektrischen Feldes dienenden Elektroden (»Integriert optische Richtkoppler«, P. Baues, ELEKTRONIK-ANZEIGER, 1977, Nr. 3, Seiten 19—22). Die Wellenleiter sind so bemessen und angeordnet, daß beim Anlegen eines elektrischen Feldes die im primären Wellenleiter geführte Lichtwelle verbleibt und ohne elektrisches Feld in den sekundären Wellenleiter eindringt. Je nach dem Aufbau können optische Richtkoppler zur Modulation oder als Lichtschalter verwendet werden. Die bei der Erfindung vorgesehenen und zur Übertragung von Lichtsignalen bekannten Glas- oder Kunststoff-Lichtleiterabschnitte bestehen aus Kernen mit hohem Brechungsindex, die mit einem Mantel aus einem Material mit etwas geringerem Brechungsindex umgeben sind.

Bei der Erfindung wird eine Lichtschiene aus den zweiten Lichtleiterabschnitten und den daran in Reihe mit jeweils einem ihrer Wellenleiter angeschlossenen optischen Richtkopplern gebildet. Die von der Lichtquelle erzeugten Lichtimpulse werden durch diese Lichtschiene geführt und durch Anlegen einer Steuerspannung an einen der Richtkoppler in den zugehörigen optischen Kanal gelenkt. Durch ein geeignetes Steuerprogramm wird die Folge der anzusteuernden Richtkoppler und deren zyklische Wiederholung festgelegt. Ebenso kann aber auch die Dauer der Ablenkung eines jeden Richtkopplers durch die Dauer der angelegten Steuerspannung bestimmt werden.

Das neuartige Lichtverteilungssystem ist insbesondere zum Betrieb mit sichtbarer in der Grundschwingung sich ausbreitender Strahlung geeignet, wobei als Strahlungsquelle z. B. eine Laser-Diode verwendet wird. Ebenso können aber auch Strahlen mit einer größeren oder einer kleineren Wellenlänge oder polarisiertes Licht zur Anwendung kommen.

Die optischen Richtkoppler unterliegen weder einem Verschleiß noch einer Alterung, da bei ihnen mit Hilfe der Steuerspannung nur der Brechungsindex des Materials verändert wird.

Nach einer Ausgestaltung der Erfindung kann jeder optische Kanal auch empfangsseitig aus einem Lichtleiterabschnitt bestehen wobei jeder dieser Lichtleiterabschnitte an ein und dieselbe Lichtempfangsdiode über einen zusätzlichen Lichtleiter anschließbar ist. Diese Ausbildung hat den Vorteil, daß die nacheinander von den einzelnen Lichtleitern empfangenen Lichtimpulse auf optische Wege nur einer Lichtempfangsdiode zugeführt werden, während bisher eine Vielzahl Lichtempfangsdioden benötigt wurde. Das Lichtgitter besitzt also zur Abgabe und Aufnahme der Lichtenergie nur zwei Dioden, nämlich eine Leuchtdiode und eine Fotodiode. In vorteilhafter Weise wird hierdurch die Aussteuerung der Dioden und die Selbstüberwachung des Lichtgitters wesentlich vereinfacht.

Der Anschluß der einzelnen Lichtleiter an den zur Lichtempfangsdiode führenden Lichtleiter kann beispielsweise dadurch erfolgen, daß die empfangsseitigen Lichtleiterabschnitte mittels eines Sternteilers mit dem zur Lichtempfangsdiode führenden zusätzlichen Lichtleiter verbunden sind (ntz Bd. 31, 1978, 423—425). Es besteht aber auch die Möglichkeit, daß die empfangsseitigen Lichtleiterabschnitte mit dem zur Lichtempfangsdiode führenden Lichtleiter durch je einen weiteren optischen Richtkoppler verbindbar sind, deren Elektroden von der Steuer- und Auswerteeinrichtung synchron zu den der Lichtquelle zugeordneten optischen Richtkopplern steuerbar sind. Die Lichtleitersysteme für die Lichtanstrahlung und den Lichtempfang sind dadurch gleich, so daß die Fertigung vereinfacht wird. Außerdem lassen sich die Richtkoppler beider Seiten in vielen Kombinationen ansteuern und erweitern damit die Möglichkeiten für die Steuerung und Überprüfung des Lichtgitters. Durch das Verschließen der nicht angesteuerten Kanäle wird auch der störende Einfluß von Überlappung und Fremdlicht weitgehend ausgeschaltet.

Die Lichtempfangseinrichtung können entweder auf der der Lichtquelle gegenüberliegenden Seite des zu kontrollierenden Arbeitsraumes angeordnet sein, oder bei Verwendung eines Reflektors an die auf der Sendeseite angeordneten optischen Einrichtungen angeschlossen sein.

Der Gegenstand der Erfindung ist in der Zeichnung anhand von blockschaltbildern in mehreren Ausführungsbeispielen dargestellt; es zeigt

Fig. 1 ein Lichtgitter mit optischen Richtkopplern auf der Sendeseite,

Fig. 2 ein Lichtgitter mit optischen Richtkopplern auf der Sende- und Empfangsseite,

Fig. 3 ein Lichtgitter mit optischen Richtkopplern auf der Sendeseite und Lichtleitern auf der Empfangsseite und

Fig. 4 ein Lichtgitter mit Reflektor und optischen Richtkopplern sowie den Empfangsteil bildenden Lichtleitern auf der Sendeseite.

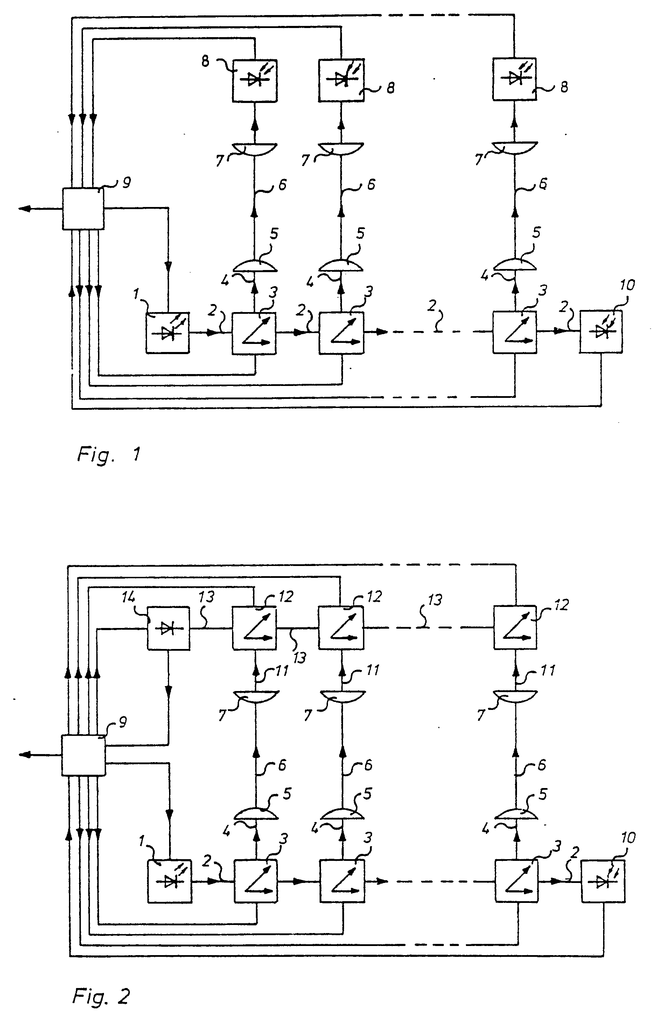

Das in Fig. 1 dargestellte Lichtgitter besitzt eine Lichtquelle 1, beispielsweise in Form einer Laser-Diode, an welche ein Lichtleiter 2 angeschlossen ist. Dieser Glas- oder Kunststoff-Lichtleiter 2 besteht aus einem Kern mit hohem Brechungsindex, der mit einem Mantel aus einem Material mit etwas geringerem Brechungsindex umgeben ist. An diesen Lichtleiter 2 sind in einer Reihe aufeinanderfolgend eine Vielzahl von optischen Richtkopplern 3 angeordnet. Es handelt sich hierbei um Bauteile, die an sich bekannt sind und beispielsweise in der Lit.-St. »Integriert optische Richtkoppler«, P. Baues, ELEKTRONIK-ANZEIGER, 1977 Nr. 3, Seiten 19—22 beschrieben sind. Sie bestehen aus zwei in ein Substrat eingebetteten dielektrischen Wellenleitern und dem Aufbau eines elektrischen Feldes dienenden Elektroden. Die Wellenleiter sind so bemessen und angeordnet, daß beim Anlegen eines elektrischen Feldes die im primären Wellenleiter geführte Lichtwelle verbleibt und ohne elektrische Feld in den sekundären Wellenleiter eindringt. Dabei gibt es verschiedene Ausführungen, welche entweder zwei oder drei Elektroden aufweisen. Diese optischen Richtkoppler 3 sind an den Lichtleiter 2 jeweils so angeschlossen, daß die von der Lichtquelle 1 kommenden Lichtimpulse im ungekoppelten Zustand durch die primären Wellenleiter dieser Richtkoppler 3 geführt werden. Die primären Wellenleiter der Richtkoppler 3 sind also in Reihe geschaltet; der Lichtleiter 2 besteht also praktisch aus mehreren Abschnitten, die jeweils am Ein- und Ausgang der Richtkoppler angeschlossen sind.

An den Ausgang der sekundären Wellenleiter ist jeweils ein Lichtleiter 4 angeschlossen, der zu einer optischen Einrichtung führt, die beispielsweise aus je einer dargestellten Linse 5 bestehen kann. Am Ausgang dieser Linsen 5 wird jeweils ein optischer Kanal 6 gebildet. Die Lichtstrahlen gelangen durch diese optischen Kanäle 6 zu einer Linse 7, welche sie auf jeweils eine Lichtempfangsdiode 8, beispielsweise eine Fotodiode, lenkt. Diese Lichtempfangsdioden 8 sind an eine elektronische Steuer- und Auswertungseinrichtung 9 angeschlossen. Außerdem ist am Ende des Lichtleiters 2 eine Fotodiode 10 angeordnet, welche Kontrollzwecken dient.

Die elektronische Steuer- und Auswertungseinrichtung kann so eingerichtet sein, daß sie an die Lichtquelle 1 Steuerimpulse zur Erzeugung hochfrequenter Lichtimpulse gibt. Gleichzeitig steuert diese elektronische Steuer- und Auswertungseinrichtung 9 die optischen Richtkoppler 3 derart, daß deren Elektroden nacheinander und zyklisch angesteuert werden. Hierdurch werden die von der Lichtquelle 1 kommenden Lichtimpulse an dem jeweils durchgesteuerten Richtkoppler 3 in den zugehörigen Lichtleiter 4 gelenkt, von wo aus sie dann weiter durch den betreffenden optischen Kanal 6 zu der zugeordneten Lichtempfangsdiode 8 gelangen, deren Signale der elektronischen Steuer- und Auswertungseinrichtung zugeführt werden. Die elektronische Steuer- und Auswertungseinrichtung taktet also einerseits die Lichtimpulse und steuert andererseits die Richtkoppler in der vorgesehenen Folge und zyklisch. Weiterhin wertet diese Einrichtung die von den Lichtempfangsdioden 8 ankommenden Signale aus, beispielsweise in einem Zähl- und Vergleichswerk. Stimmt die in einer bestimmten Zeiteinheit empfangene Größe mit dem zugehörigen Vergleichswert nicht überein, wird von der elektronischen Steuer- und Auswertungseinrichtung ein Störsignal abgegeben, welches dann zur Stillegung der Arbeitsmaschine o. dgl. verwendet werden kann.

Am Ausgang des Lichtleiters 2 ist weiterhin eine Fotodiode 10 angeordnet, welche Kontrollzwecken dient. Diese kann insbesondere zur Überprüfung der Funktionsfähigkeit der Lichtquelle 1 und der Richtkoppler 3 verwendet werden. Befinden sich die Richtkoppler 3 alle im ungekoppelten Zustand, kann überprüft werden, ob die Lichtquelle 1 ihre Funktion ausübt. Eine Überprüfung der Richtkoppler geschieht dadurch, daß jeweils einer in den gekoppelten Zustand überführt wird; im Falle der Funktionsunfähigkeit gelangt dann der Lichtstrahl über den Lichtleiter 2 in die Fotodiode 10, die ein entsprechendes Störsignal an die elektronische Steuer- und Auswertungseinrichtung liefert.

Bei dem Ausführungsbeispiel nach Fig. 2 ist die Sendeseite gleich aufgebaut, wie die Ausführung nach Fig. 1. Hier ist jedoch auf der Empfängerseite hinter den Linsen 7 jeweils ein Lichtleiter 11 angeschlossen, der in den einen Wellenleiter eines zugeordneten optischen Richtkopplers 12 mündet. Die Sekundärseite dieser Richtkoppler ist mit einem Lichtleiter 13 verbunden, der zu einer gemeinsamen Lichtempfangsdiode 14 führt.

Bei dieser Ausführung werden die optischen Richtkoppler auf der Empfangsseite ebenfalls durch die elektronische Steuer- und Auswertungseinrichtung gesteuert und zwar im gleichen Rhythmus wie die zugeordneten optischen Richtkoppler 3 des betreffenden optischen Kanals 6. Ebenso wird auch die Lichtempfangsdiode 14 in einem entsprechenden Rhythmus gesteuert.

Sowohl der Lichtleiter 2 als auch der Lichtleiter 13 bilden eine Art »Lichtschiene«, an welche die optischen Kanäle anschließen. Bei dieser Ausführung kann die Steuerung der einzelnen optischen Richtkoppler in jeder beliebigen Weise variiert werden. Es besteht auch die Möglichkeit, zwei oder mehrere optische Kanäle 6, die nebeneinander liegen können, auszuleuchten, oder beispielsweise eine Ausleuchtung von außen nach innen vorzunehmen, um beispielsweise Dickemessungen o. dgl. durchführen zu können.

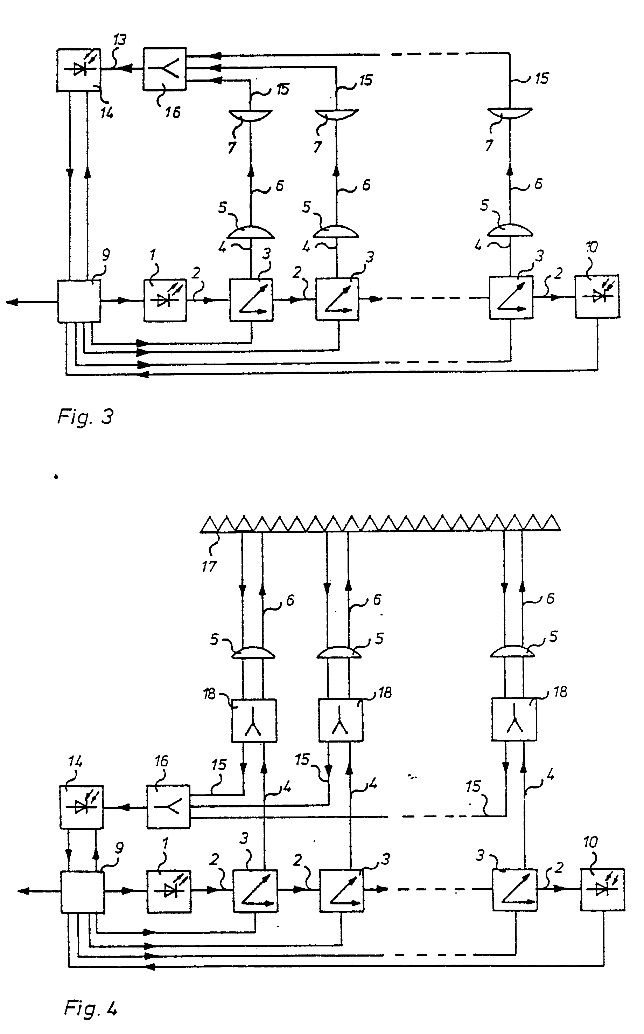

Eine weitere Abwandlung zeigt Fig. 3. Hier sind auf der Empfängerseite an die Linsen 7 der einzelnen optischen Kanäle 6 Lichtleiter 15 angeschlossen, die mittels eines sogenannten Sternteilers 16 vereint werden und an eine Lichtempfangsdiode 14 angeschlossen sind. Sternteiler dieser Art sind sogenannte Lichtleitfaserabzweigungen, wie sie beispielsweise in ntz Bd. 31, 1978, Seiten 423—425 beschrieben sind. Diese können sowohl zur Verteilung von Lichtstrahlen als auch zum Sammeln von Lichtstrahlen Verwendung finden.

Ähnlich der Ausführung nach Fig. 3 ist auch das Lichtgitter nach Fig. 4 ausgeführt. Hier ist jedoch eine Rückführung der Lichtstrahlen eines jeden optischen Kanals 6 mittels eines Reflektors 17 vorgesehen. Die von diesem Reflektor 17 zurückgelenkten Lichtstrahlen gelangen jeweils zu der ihnen zugeordneten Linse 5 zurück und werden von dort aus über einen Ableiter 18, der hier ebenfalls als Lichtleitfaserabzweigung ausgebildet ist und über je einen weiteren Lichtleiter 15 zu einem Sternteiler 16 geführt, der die einzelnen Lichtleiter 15 vereint. Auch hier wird der vereinte Lichtleiter einer Lichtempfangsdiode 14 zugeführt.

Die Richtkoppler können auch in der Art einer Mikroschaltung auf einem Substrat hintereinander angeordnet werden, wobei die primären Wellenleiter jeweils an eine Lichtschiene angeschlossen sind. Ebenso besteht aber auch die Möglichkeit eines kaskadenförmigen Aufbaues. Hierbei ist einem Bauteil nur ein primärer Wellenleiter zugeordnet, hinter dem kaskadenförmig die sekundären Wellenleiter der einzelnen Richtkoppler angeordnet sind. Diesen kaskadenförmig angeordneten Wellenleitern sind entsprechende Elektroden zugeordnet. Werden diese gleichzeitig durchgesteuert, kann der Lichtstrahl vom primären Wellenleiter aufeinanderfolgend über mehrere sekundäre Wellenleiter geführt werden.

**Patentansprüche**

1. Lichtgitter mit einer einzigen Lichtquelle (1), deren Lichtbündel nacheinander mittels einer von einer Steuereinrichtung (9) gesteuerten Lichtverteilereinheit (2, 3) auf mehrere, sendeseitig je einen ersten Lichtleiterabschnitt (4) enthaltende optische Kanäle (6) geführt ist, sowie mit einer der Erfassung des die Kanäle durchsetzenden Lichts dienenden Lichtempfangseinrichtung, der eine elektronische Auswerteschaltung (9) nachgeschaltet ist, gekennzeichnet durch folgende Merkmale:

(a) die Lichtverteilereinheit (2, 3) enthält eine mit der Anzahl der optischen Kanäle (6) identische Anzahl optischer Richtkoppler (3), die jeweils einen primären und einen sekundären Wellenleiter sowie Elektroden zur Steuerung der Ankopplung des sekundären an den primären Wellenleiter in Abhängigkeit von dem an den Elektroden liegenden Potential aufweisen,

(b) die jeweiligen sekundären Wellenleiter der optischen Richtkoppler (3) liegen jeweils am Lichtleiterabschnitt (4) eines optischen Kanals (6),

(c) die primären Wellenleiter der optischen Richtkoppler (3) sind über zweite Lichtleiterabschnitte (2) mit der Lichtquelle (1) und untereinander in Serie gelegt,

(d) die Elektroden der optischen Richtkoppler (3) sind mit einer aus der Steuereinrichtung und der elektronischen Auswerteschaltung bestehenden elektronischen Steuer- und Auswerteeinrichtung (9) verbunden.

2. Lichtgitter nach Anspruch 1, dadurch gekennzeichnet, daß jeder optische Kanal (6) empfangsseitig einen dritten Lichtleiterabschnitt (15) aufweist und daß die dritten Lichtleiterabschnitte (15) mittels eines Sternteilers (16) mit einem zu einer einzigen Lichtempfangsdiode (14) führenden zusätzlichen Lichtleiter (13) verbunden sind.

3. Lichtgitter nach Anspruch 1, dadurch gekennzeichnet, daß jeder optische Kanal (6) empfangsseitig einen dritten Lichtleiterabschnitt (11) aufweist, und daß die dritten Lichtleiterabschnitte (11) jeweils mit dem sekundären Wellenleiter je eines weiteren optischen Richtkopplers (12) verbunden sind, deren primäre Wellenleiter über vierte Lichtleiterabschnitte (13') miteinander sowie mit einer einzigen Lichtempfangsdiode (14) in Serie gelegt sind und deren Elektroden von der Steuer- und Auswerteeinrichtung (9) synchron zu den der Lichtquelle (1) zugeordneten optischen Richtkopplern (3) gesteuert sind.

**Claims**

1. A light guard having a single light source (1) whose light beam is successively guided, via a light distributor unit (2, 3) controlled by a control device (9), among a number of optical channels (6) each containing a first photoconductor portion (4) at the transmitter end, the light guard also comprising a light receiver for receiving the light travelling through the channels and connected upstream of an electronic evaluating circuit (9), characterised by the following features:

(a) the light distributor unit (2, 3) contains a number of optical directional couplers (3) identical with the number of optical channels (6) and each comprising a first and a second wave guide and electrodes for controlling the coupling between the secondary and the primary wave guide in dependence on the potential applied to the electrodes,

(b) the second wave guide of each optical directional coupler (3) is connected to the photoconductor portion (4) of an optical channel (6),

(c) the primary wave guides of the optical directional coupler are connected via second photoconductor portions (2) to the light source (1) and to one another in series, and

(d) the electrodes of the optical directional coupler (3) are connected to an electronic control and evaluating device (9) comprising the control device and the electronic evaluating device.

2. A light guard according to claim 1, characterised in that each optical channel (6) comprises a third photoconductor portion (15) at the receiver end and the third photoconductor portions (15) are connected via a star distributor (16) to an additional photoconductor (13) leading to a single light receiving diode (14).

3. A light guard according to claim 1, characterised in that each optical channel (6) has a third photoconductor portion (11) at the receiver end and the third photoconductor portions (11) are each connected to the secondary wave guide of an additional optical directional coupler (12) whose primary wave guides are connected via fouth photoconductor portions (13') to one another and to a single light receiving diode (14) in series and whose electrodes are controlled by the control and evaluating device (9) in synchronism with the optical directional couplers (3) associated with the light source (1).

**Revendications**

1. barriere lumineuse comportant une source de lumiere unique (1), dont la faisceau de lumiere est envoye successivement, au moyen d'un repartiteur de lumiere (2, 3) controle par un dispositif de commande (9), a plusieurs canaux optiques (6) contenant chacun du cote emission, un premier element (4) de guide d'ondes de lumiere, ainsi qu'un dispositif de reception de lumiere servant a determiner la lumiere traversant les canaux et en aval duquel est branche un circuit electronique d'exploitation (9), caracterisee par les moyens suivants:

a) le repartiteur de lumiere (2, 3) contient un nombre, identique au nombre des canaux optiques (6), de coupleurs optiques directionnels (3), qui comportent chacun un guide d'ondes primaire et un guide d'ondes secondaire ainsi que des electrodes servant a commander le couplage du guide d'ondes secondaire au guide d'ondes primaire en fonction du potentiel applique aux electrodes,

b) chaque guide d'ondes secondaire des coupleurs optiques directionnels (3) est raccorde a l'element (4) de guide d'ondes de lumiere d'un canal optique (6),

c) les guides d'ondes primaires des coupleurs optiques directionnels (3) sont relies par l'intermediaire de second elements (2) de guides d'ondes de lumiere a la source de lumiere (1) et sont branches en serie,

d) les electrodes des coupleurs optiques directionnels (3) sont reliees a un dispositif electronique (9) de commande et d'exploitation constitue par le dispositif de commande et le circuit electronique d'exploitation.

2. barriere lumineuse suivant la revendication 1, caracterisee par le fait que chaque canal optique (6) comporte, du cote reception, un troisieme element (15) de guide d'ondes de lumiere et que les troisiemes elements (15) de guides d'ondes de lumiere sont relies par l'intermediaire d'un repartiteur en etoile (16) a des guides de lumiere supplementaires (13) aboutissant a une seule diode receptrice de lumiere (14).

3. barriere lumineuse suivant la revendication 1, caracterisee par le fait que chaque canal optique (6) comporte, du cote reception, un troisieme element (11) de guide d'ondes de lumiere et que les troisiemes elements (11) de guides d'ondes de lumiere sont relies respectivement au guide d'ondes secondaire des differets autres coupleur optiques directionnels (12), dont les guides d'ondes primaires sont branches en serie, par l'intermediaire de quatriemes elements (13') de guides d'ondes de lumiere, entre eux ainsi q'avec une diode receptrice de lumiere (14) unique et dont les electrodes sont commandees par le dispositif (9) de commande et d'exploitation en synchronisme avec les coupleurs optiques directionnels (3) associes a la source de lumiere (1).

Fig. 1

Fig. 2

Fig. 3

Fig. 4